# DEMANDE DE BREVET EUROPEEN

(11) **EP 4 559 658 A1**
(43) Date de publication de la demande: **28.05.2025**
(21) Numéro de dépôt: 24213515.0
(22) Date de dépôt: 18.11.2024
(51) Int. Cl.: B29C 48/08, B29C 48/285, B29C 48/305, B29C 48/405, B29C 48/57, B29C 48/80, B29C 48/885, B29C 48/88, B29C 48/365, B29C 48/92, B29C 48/00, B29C 43/24

(54) **PROCÉDÉ DE FABRICATION CONTINUE D'UN FILM DE POLYPROPYLÈNE CHARGÉ**

(30) Priorité: 21.11.2023 BE 202305944
(71) Demandeur: Sabert Corporation Europe, 1400 Nivelles (BE)
(72) Inventeur: SORET, Jean-Luc, 1340 Ottignies (BE)
(74) Mandataire: Calysta NV

(57) **Abrégé**

L'invention concerne un procédé de fabrication continue d'un film de FPP, comprenant: (i) une alimentation en PP d'une extrudeuse bivis; (ii) une fusion-plastification au niveau d'un tronçon vis; (iii) une alimentation avec une charge minérale au niveau d'un tronçon vis; (iv) un compoundage au niveau d'un tronçon malaxeur; (v) un transport-compression au niveau d'un tronçon vis; (vi) une d'évacuation et un passage au travers d'une pompe à masse fondue puis d'une tête d'extrusion et (vii) un calandrage; le procédé comprenant une régulation de la pression en sortie d'extrudeuse en maintenant le débit massique de matière alimentée à une valeur constante.

## Description

### Domaine technique

La présente invention se situe dans le domaine de la plasturgie et des emballages alimentaires. En particulier, elle se situe dans le domaine de la fabrication continue de films de polypropylène chargé destinés à être utilisés pour produire des emballages alimentaires, notamment par thermoformage.

Plus particulièrement, l'invention concerne un procédé de fabrication continue d'un film de polypropylène chargé (ou FPP) par compoundage-calandrage, au départ d'une matière première à base de polypropylène, d'une part, et d'une charge minérale, d'autre part.

### Art antérieur

Le polypropylène (ou polypropène, désigné aussi communément sous l'acronyme « PP »), de formule chimique (-CH₂-CH(CH₃)-)ₙ, est un polymère thermoplastique résultant de la polymérisation de monomères propylène [(CH₂=CH-CH₃)] en présence de catalyseurs. Le polypropylène présente de nombreux avantages : il est bon marché, inodore et non toxique, chimiquement inerte, indéchirable, très résistant à la chaleur, à la fatigue et à la flexion, très peu dense, d'aspect esthétique brillant et recyclable. Ses propriétés en font un matériau plastique de grande consommation. En particulier, le polypropylène est couramment utilisé pour les emballages alimentaires. Les emballages alimentaires en PP sont en effet avantageux dans la mesure où ils sont solides, légers, résistants au changement de température extrêmes et à la chaleur (ils peuvent donc passer au four à micro-ondes et sont stérilisables à la vapeur), sont imperméables et résistants à la graisse. Il existe ainsi de nombreux types d'emballages en PP sur le marché alimentaire, tels que des récipients de différentes formes et capacités, des bouteilles, des pots (par exemple, pour les yaourts), des barquettes, des blisters, etc. mais aussi pour le stockage/transport d'aliments tels que des plateaux, des verres, des couverts, etc.

Il est également courant dans le domaine des emballages alimentaires d'utiliser un polypropylène modifié par l'ajout d'une « charge minérale». Une charge, en plasturgie, correspond à un composé insoluble/immiscible qui, mélangé à un polymère, permet d'améliorer une ou plusieurs de ses caractéristiques (propriétés électriques, thermiques, mécaniques, chimiques, coût de production, etc.). On parle alors de polypropylène chargé (également désigné communément sous l'acronyme « FPP », de l'anglais « filled polypropylene » ). En particulier, il est connu d'utiliser un PP chargé avec du talc ou avec du carbonate de calcium. Le talc permet de réduire les anisotropies de retraits, d'augmenter la résistance thermique, la rigidité et d'obtenir une coloration blanche. Le carbonate de calcium, quant à lui, permet de réduire les coûts en réduisant le contenu en polymère par objet, de réduire les retraits et le vieillissement UV.

De manière générale, les emballages alimentaires sont fabriqués communément par thermoformage, procédé dans lequel la matière plastique (sous forme d'un film/d'une feuille le plus souvent) est ramollie par chauffage avant d'être mise en forme par son application sur un moule. Son refroidissement ultérieur permet un démoulage.

Le thermoformage nécessite dès lors au préalable la fabrication d'un film ou feuille de thermoplastique. Dans le cas du polypropylène chargé, la fabrication du film se fait classiquement en passant par deux étapes, réalisées de manière discontinue sur deux lignes de production différentes :
1) une étape de compoundage-extrusion-granulation au départ (i) d'une matière première PP (dit « vierge », sous forme de poudre, flocons ou granulés) et (ii) de la charge, pour former des granulés de FPP (produit semi-fini) ; et puis
2) une étape d'extrusion-calandrage des granulés de FPP préalablement formés à l'étape 1), pour donner un film de FPP.

L'enchaînement de produits est donc comme suit : granulés de PP → granulés de FPP → film de FPP.

L'extrusion est une technique de fabrication/transformation continue, rapide et peu coûteuse d'un thermoplastique. Elle consiste à transporter, fondre, malaxer, cisailler, plastifier, comprimer la matière thermoplastique dans une extrudeuse qui pousse la matière plastifiée fondue et sous pression vers une tête d'extrusion munie d'un orifice de petite dimension appelé « filière » qui met en forme la matière. Celle-ci est ensuite refroidie et figée dans sa forme définitive.

Le processus de compoundage-extrusion-granulation permet le mélange par fusion d'un thermoplastique avec un ou plusieurs additifs immiscible(s) (par exemple, une charge minérale comme du talc) afin d'obtenir une matière plastique homogène sous forme d'un « compound » ou « composite » aux propriétés modifiées. Cette technique inclut une extrusion dans une extrudeuse à vis. Le thermoplastique sort au travers d'une filière à trous circulaires, sous forme de cordons qui sont coupés. Le refroidissement et le séchage donnent des granulés, par exemple de 1 à 5 millimètres de diamètre.

L'extrusion-calandrage est une opération qui consiste à faire passer un matériau thermoplastique dans une extrudeuse munie d'une filière plate et puis entre deux cylindres rapprochés et contrarotatifs (éventuellement refroidis) de manière à produire un film ou une feuille de faible épaisseur.

De manière générale, une extrudeuse est constituée d'un fourreau cylindrique dans lequel vient tourner au moins une vis sans fin entraînée en rotation. Le fourreau est communément thermorégulé. La matière est généralement introduite via une ouverture ménagée à une extrémité du fourreau et munie d'une trémie. On parle d'extrusion "monovis" lorsque l'extrudeuse comporte une vis unique tournant à l'intérieur d'un fourreau dont la section est circulaire et d'extrusion « bivis » lorsque l'extrudeuse comprend deux vis, parallèles et généralement identiques, tournant à l'intérieur d'un fourreau dont la section a la forme d'un huit. On distingue les extrudeuses bi-vis co-rotatives (les vis tournent dans le même sens et ont le même sens de filet) et les extrudeuses bi-vis contra-rotatives (les deux vis tournent en sens inverse).

L'extrudeuse bivis est particulièrement avantageuse en comparaison à son équivalent monovis. En effet, dans une bivis, le transport est très efficace (même avec des fourreaux courts et des vitesses de vis faibles) car l'une des vis balaye en permanence le chenal de l'autre vis, ce qui empêche la matière de coller à cette vis (on parle aussi de vis « auto-nettoyante »). De plus, les extrudeuses bivis ont une capacité de mélange très efficace. Finalement, les extrudeuses bi-vis peuvent opérer à une teneur en eau de la matière première très variable. Elles permettent également un dégazage grâce à un ou plusieurs « évents » qui peut/peuvent être ménagé(s) dans le fourreau.

Dans le cas particulier d'un processus de compoundage-extrusion-granulation, l'extrudeuse bivis co-rotative est communément choisie préférentiellement car elle privilégie plutôt le malaxage et l'homogénéisation de la matière que la montée en pression. On parle même de « vis de compoundage ».

Par contre, dans le cas d'un processus d'extrusion-calandrage pour former un film, l'extrudeuse bivis n'est pas adaptée, contrairement à l'extrudeuse monovis. En effet, la fabrication d'un film requiert absolument une pression extrêmement constante en sortie d'extrudeuse afin d'avoir un débit constant de polymère fondu en sortie et que le film produit soit d'épaisseur sensiblement constante. Ceci ne pose aucun problème avec une extrudeuse monovis qui génère des variations de pression/débit modérées en sortie d'extrudeuse, et ces variations peuvent aisément et classiquement être compensées/régulées par le passage au travers d'une pompe à masse fondue en sortie d'extrudeuse avant la tête d'extrusion. Par contre, la fabrication d'un film de qualité n'est pas possible classiquement avec une extrudeuse bivis qui donne des fluctuations de pression beaucoup trop importantes et le passage par une pompe à masse fondue ne permet pas de lisser de manière suffisante ces grandes fluctuations. Pour ces raisons, la fabrication d'un film de plastique est dès lors communément opérée par extrusion en utilisant une monovis.

Ainsi, classiquement, pour fabriquer un film de FPP, cela requiert 1) une étape de compoundage-extrusion-granulation de PP et d'une charge à l'aide d'une extrudeuse bivis, pour former des granulés de FPP et 2) une étape d'extrusion-calandrage des granulés de FPP (préparés préalablement donc) à l'aide d'une extrudeuse monovis pour donner un film de FPP. Les étapes 1) et 2) sont donc opérées distinctement, sur deux lignes de production différentes, avec deux extrudeuses de type différents et donc deux cycles d'extrusion (fusion-refroidissement) consécutifs, un sur chaque ligne.

Par conséquent, il serait d'un intérêt tout particulier de disposer d'un procédé de fabrication d'un film de polypropylène chargé (ou FPP) au départ de polypropylène « vierge » sous forme de granulés/flocons/poudre et d'une charge minérale, selon un processus en continu, opéré sur une seule ligne de production, à l'aide d'une seule extrudeuse. Ceci aurait évidemment un impact très positif sur les temps de production, les coûts de production, la consommation d'énergie, les investissements, l'occupation du site de production en termes d'espace, l'occupation des ouvriers, etc.

### Objectifs de l'invention

Un objectif de la présente invention est de surmonter les problèmes de l'état de la technique décrits ci-dessus.

Un objectif de l'invention est de fournir un procédé de fabrication d'un film de polypropylène chargé au départ de polypropylène « vierge » et d'une charge minérale, qui permettent une diminution des temps de production et/ou des coûts de production et/ou de la consommation d'énergie et/ou des investissements.

En particulier, un objectif de l'invention est de fournir un procédé de fabrication d'un film de polypropylène chargé au départ de polypropylène « vierge » et d'une charge minérale, opéré sur une seule ligne de production.

Un autre objectif de l'invention est de fournir un procédé de fabrication d'un film de polypropylène chargé au départ de polypropylène « vierge » et d'une charge minérale, opéré à l'aide d'une seule extrudeuse et donc d'un seul cycle de fusion-refroidissement.

### Description de l'invention

Pour atteindre ces objectifs, il est prévu suivant l'invention un procédé de fabrication continue d'un film de polypropylène chargé (FPP), ledit procédé comprenant les étapes suivantes, d'amont en aval:
- une étape **A** d'alimentation d'une extrudeuse bivis corotative avec une matière à transformer comprenant au moins 40% de polypropylène, ladite extrudeuse comprenant un fourreau dans lequel sont logées deux vis identiques entraînées en rotation dans le même sens, chacune des deux vis comportant une pluralité de tronçons (Tx) ;
   et, au sein de ladite extrudeuse,
   ∘ une étape **B** de fusion-plastification au niveau d'un tronçon **T1** de type vis ;
   ∘ une étape **C** d'homogénéisation au niveau d'un tronçon **T2** de type malaxeur;
   ∘ une étape **D** d'alimentation avec une charge minérale au niveau d'un tronçon **T3** de type vis, la quantité de charge minérale à l'étape **D** étant fixée en fonction de la quantité de charge minérale désirée dans ledit film de FPP ;
   ∘ une étape **E** de compoundage au niveau d'un tronçon **T4** de type malaxeur;
   ∘ une étape **F** de transport-compression au niveau d'un tronçon **T5** de type vis ;
- une étape **G** d'évacuation d'une matière transformée hors de ladite extrudeuse ;
- une étape **H** de passage de ladite matière transformée au travers d'une pompe à masse fondue ;
- une étape **I** de passage de ladite matière transformée au travers d'une tête d'extrusion à filière plate ; et
- une étape **J** de calandrage, permettant d'obtenir un film de FPP comprenant une charge minérale entre 5 et 50% en poids ;
ledit procédé comprenant en outre une étape de régulation de la pression, en sortie de ladite extrudeuse et directement en aval de l'étape **G**, en maintenant le débit massique de matière à transformer à l'étape **A** d'alimentation à une valeur s'éloignant au maximum de 5% d'une valeur-cible prédéterminée.

L'invention est ainsi basée sur une approche nouvelle et inventive. En effet, les inventeurs ont découvert, de manière surprenante, qu'il était possible de fabriquer un film de polypropylène chargé au départ de PP « vierge » selon un processus continu sur une seule ligne de production et à l'aide d'une seule extrudeuse en combinant, avec les autres caractéristiques de l'invention (i) l'utilisation d'une extrudeuse bivis corotative présentant une successions particulières de tronçons spécifiques selon l'invention et (ii) une étape de régulation de la pression en sortie de l'extrudeuse en gardant le débit massique de matière alimentée dans l'extrudeuse à une valeur fixe ou pratiquement fixe, en particulier s'éloignant au maximum de 5% d'une valeur-cible prédéterminée. Une telle étape de régulation selon l'invention permet en effet de réduire fortement les variations de débit/pression en sortie d'extrudeuse bivis, qui ne peuvent pas être suffisamment compensées par une pompe à masse fondue et qui sont inenvisageables pour fabriquer un film de bonne qualité.

L'invention est donc particulièrement avantageuse car, en comparaison avec le procédé usuel de l'état de la technique pour fabriquer un film de FPP au départ de PP (c'est-à-dire la succession de deux processus opérés sur des lignes de production distinctes et impliquant deux cycles successifs d'extrusion), le procédé de l'invention permet de réduire significativement le temps et les coûts de production d'un film de FPP, la consommation d'énergie, les investissements, l'occupation du site de production en terme d'espace, l'occupation des ouvriers, etc.

De plus, l'invention amène également les avantages intrinsèques de la bivis expliqués plus haut.

D'autres caractéristiques, détails et avantages de l'invention ressortiront de la description détaillée et de la figure donnée ci-après, à titre illustratif et non limitatif.

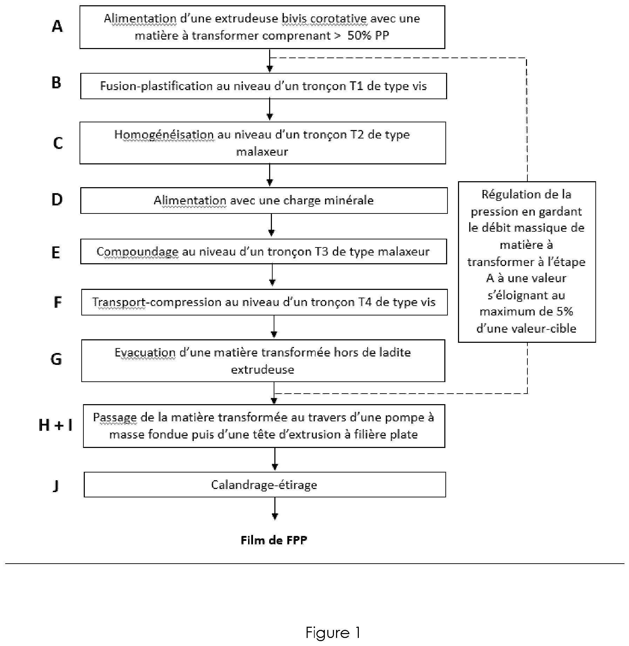

La figure 1 montre un organigramme schématisant les étapes du procédé selon l'invention.

Dans la présente description et les revendications, il est bien entendu que les termes « un », « une » ou « le » signifient « au moins un » et ne doivent pas être limités à « un seul », sauf indication contraire explicite, De plus, lorsqu'une plage de valeur est indiquée, les extrémités sont incluses. Finalement, toutes les valeurs intégrales et de sous-domaine dans une gamme/plage numérique sont expressément incluses comme si explicitement écrites.

Le procédé l'invention est un procédé de fabrication continue d'un film de polypropylène chargé (FPP). Par « fabrication continue » (ou fabrication en ligne), on entend ici, comme on l'entend communément dans le domaine concerné, que étapes A-J dudit procédé se déroulent en continu et sur une même ligne de production (par opposition à des étapes « hors ligne », comme par exemple le thermoformage ultérieur du film obtenu).

Le procédé l'invention est un procédé de fabrication d'un film de polypropylène chargé. Le polypropylène chargé est également désigné dans la présente description par l'acronyme « FPP » (de l'anglais « filled polypropylène » ). La charge du FPP dans l'invention est une charge minérale.

Le film de FPP selon l'invention peut avoir des dimensions variables, celles communément considérées dans le domaine, en particulier avec l'objectif de fabriquer des emballages alimentaires. Son épaisseur est également variable et peut aller de quelques dizaines de microns à quelques millimètres, par exemple de 30 microns à 3 mm. Dans le domaine, on distingue parfois la feuille (> 100 µm) du film (< 100 µm) en fonction de l'épaisseur mais dans le présent texte, le terme « film » sera utilisé indépendamment de l'épaisseur.

Le procédé de l'invention comprend les étapes **A** à **J**, d'amont en aval, les étapes **B** à **G** étant opérées au sein de l'extrudeuse.

Le procédé de l'invention comprend une première étape **A** d'alimentation d'une extrudeuse avec une matière à transformer.

La matière à transformer selon l'invention comprend au moins 40% de polypropylène, de préférence au moins 50%. Le polypropylène qui est alimenté à l'étape **A** peut être un polypropylène « vierge » (c'est-à-dire issu du processus de formulation), un polypropylène recyclé (provenant de déchets de production interne et/ou d'une filière de tri-recyclage externe) ou un mélange des deux. Selon un mode de réalisation, la matière à transformer comprend des PP d'origines et/ou de natures différentes.

La matière à transformer selon l'invention peut également comprendre, en plus du PP, du FPP, en particulier du FPP recyclé, notamment du FPP provenant de déchets de production interne (par exemple, de déchets provenant du thermoformage).

De préférence, la matière à transformer comprend au moins 20% en poids de PP recyclé et/ou de FPP recyclé. De manière toute préférée, la matière à transformer comprend au moins 20% en poids de FPP recyclé, notamment issu de déchets de production par thermoformage. Ceci est avantageux économiquement. Par exemple, le FPP recyclé peut comprendre jusqu'à 50% en poids de charge minérale.

La matière à transformer selon l'invention peut également comprendre en outre un ou plusieurs additif(s), notamment un ou plusieurs colorants.

La matière à transformer est avantageusement sous formes de flocons, de granulés et/ou de poudre.

Dans le cas où la matière à transformer comprend des composants de natures différentes (par exemple, des PP d'origine différentes ou du PP et du FPP recyclé et/ou un ou plusieurs additif(s)), lesdits composants sont de préférence pré-mélangés, en amont de l'étape **A** d'alimentation, par exemple dans un mélangeur à plusieurs composants.

Selon un mode de réalisation, l'étape d'alimentation **A** se fait à l'aide d'une trémie à pesons. Ceci permet d'alimenter l'extrudeuse avec la matière à transformer.

Selon l'invention, l'extrudeuse est une extrudeuse bivis corotative. Elle comprend un fourreau section en forme de huit dans lequel sont logées deux vis identiques entraînées en rotation dans le même sens. De préférence, les deux vis sont partiellement ou totalement interpénétrées. Selon l'invention, chacune des deux vis comportent une pluralité de tronçons (Tx). Il est entendu qu'en utilisant le terme « extrudeuse », comme communément admis dans le domaine, cela comprend également implicitement, en plus de l'ensemble vis-fourreau :
- un orifice d'alimentation principal ménagé dans le fourreau (permettant l'alimentation de la matière à transformer) ;
- deux arbres, notamment cannelés, portant les tronçons de chacune des vis (vis, malaxeur) ; et
- un groupe d'entraînement et un moteur (permettant de mettre les arbres en rotation).

Selon l'invention, le fourreau est thermorégulé, notamment à l'aide de résistances électriques ou de moyens de chauffage par infrarouge ou de moyens de chauffage par induction, notamment pilotés par des sondes de contrôle de température. De préférence, dans le cadre de l'invention, le fourreau est thermorégulé à une température dans une gamme allant de 220 à 280°C, en particulier sur toute sa longueur. Ceci permet une extrusion efficace de la matière à base de PP au sein de l'extrudeuse.

En aval de l'étape d'alimentation **A**, le procédé de l'invention comprend les étapes **B** à **G** au sein de l'extrudeuse (donc interne au fourreau) et d'amont en aval.

L'étape **B** de fusion-plastification s'opère au niveau d'un tronçon T1 de l'extrudeuse qui est de type vis. Cette étape permet à la matière d'entrer au moins partiellement en fusion tout en étant transportée/déplacée par les vis en rotation vers le tronçon suivant. Elle permet avantageusement à ce que la matière soit fondue avant l'alimentation ultérieure en charge minérale (étape **D**). Par « tronçon de type vis », on entend la définition communément admise dans le domaine de l'extrusion. Par exemple, il peut s'agir d'une vis à pas direct, à un filet.

L'étape **C** d'homogénéisation s'opère au niveau d'un tronçon T2 de type malaxeur. Cette étape permet à la matière d'être homogénéisée tout en étant transportée/déplacée par les vis en rotation vers le tronçon suivant. Ceci est particulièrement avantageux si la matière à transformer comprend des composants de natures différentes (PP, FFPP, colorants, etc.). Par « tronçon de type malaxeur », aussi appelé tronçon mélangeur, on entend la définition communément admise dans le domaine de l'extrusion. Par exemple, il peut s'agir d'un malaxeur constitué d'une pluralité de disques bilobes et/ou trilobes.

En aval de l'étape **C**, le procédé comprend une étape **D** d'alimentation de l'extrudeuse avec une charge minérale au niveau d'un tronçon T3 de type vis. Selon l'invention, la quantité de charge minérale alimentée dans l'extrudeuse est déterminée en fonction de la quantité de charge minérale désirée dans le film de FPP final. De plus, si la matière à transformer comprend du FPP recyclé, par exemple du FPP provenant de déchets de production interne, la quantité de charge minérale alimentée dans l'extrudeuse à l'étape **D** est déterminée en fonction de (i) la quantité de charge minérale désirée dans le film de FPP final et (ii) de la quantité de charge minérale déjà présente de la matière à transformer (et provenant du FPP recyclé). En effet, si la matière à transformer comprend du FPP recyclé, la charge minérale ajoutée à l'étape **D** correspond à un « complément » de charge minérale permettant d'atteindre la valeur finale désirée dans le film.

Selon un mode de réalisation de l'invention, à l'étape **D** d'alimentation, la charge minérale est ajoutée à raison d'au moins 5% en poids par rapport au poids de matière à transformer, de préférence d'au moins 10 % en poids.

Selon un autre mode de réalisation de l'invention, à l'étape **D** d'alimentation, la charge minérale est ajoutée à raison d'au plus 25% en poids par rapport au poids de matière à transformer, de préférence d'au plus 20 % en poids.

De préférence, la charge minérale selon l'invention est du talc et/ou du carbonate de calcium. De manière toute préférée, la charge minérale est du talc.

De préférence également, l'étape d'alimentation **D** se fait à l'aide d'une trémie à pesons. Ceci permet d'alimenter l'extrudeuse avec la charge minérale. Il est implicite selon l'invention que, pour permettre l'étape **D**, le fourreau de l'extrudeuse comprend également un orifice d'alimentation secondaire, positionné à la hauteur du tronçon T3.

En aval de l'étape **D**, le procédé comprend une étape **E** de compoundage au niveau d'un tronçon T4 de type malaxeur. Par «compoundage», on entend la définition communément admise dans le domaine concerné, c'est-à-dire le mélange par fusion/extrusion d'un thermoplastique avec un ou plusieurs additifs immiscible(s) (ici, la charge minérale) afin d'obtenir une matière plastique homogène sous forme d'un « compound » ou « composite » aux propriétés modifiées. Cette étape permet, alors que le thermoplastique est à l'état fondu, un mélange/une homogénéisation efficace afin de produire le composite, tout en transportant la matière grâce aux vis en rotation vers le tronçon suivant.

L'étape **F** de transport-compression selon l'invention est opérée au niveau d'un tronçon T5 de type vis. Cette étape permet à la matière transformée d'être mise sous pression et transportée par les vis en rotation vers l'extrémité du fourreau afin d'être évacuée de l'extrudeuse à l'étape **G.**

Selon un mode de réalisation particulièrement avantageux, le procédé de l'invention comprend également une étape d'échappement (ou étape de dégazage), en aval de l'étape **E** de compoundage. Cette étape d'échappement permet d'évacuer l'air, les gaz, la vapeur d'eau présents à l'intérieur de l'extrudeuse/du fourreau et évite ainsi des éventuelles bulles ou défauts dans le film final. De préférence, l'étape d'échappement se fait grâce un orifice additionnel ménagé dans le fourreau et connecté à une bivis en rotation refoulant vers l'intérieur du fourreau, ladite bivis étant connectée à une pompe d'aspiration.

Cette étape d'échappement dans le cas de l'utilisation d'une extrudeuse bivis est communément réalisée sous forme d'une orifice ouvert vers l'extérieur et positionné plus en amont dans l'extrudeuse. Le positionnement de l'étape d'échappement selon l'invention (en aval de l'étape **E**, c'est-à-dire après le compoundage où la charge minérale est intégrée à la matière) permet d'éviter des pertes de charge minérale solide par l'orifice. De plus, vu que cette étape d'échappement est réalisée au moment où la matière est fondue, la bivis connectée à l'orifice permet également d'éviter les pertes par remontée de matière fondue. La bivis en rotation refoule en effet de manière efficace (et auto-nettoyante) la matière fondue vers l'intérieur du fourreau en cas de remontée de matière.

De préférence, l'étape d'échappement se fait à l'étape **F** de transport-compression, c'est-à-dire au niveau du tronçon T5 de type vis.

Selon l'invention, le procédé comprend également une étape de régulation de la pression en sortie de ladite extrudeuse et directement en aval de l'étape **G,** en maintenant le débit massique de matière à transformer à l'étape **A** d'alimentation à une valeur s'éloignant au maximum de 5% d'une valeur-cible prédéterminée. De préférence, le débit massique de matière à transformer à l'étape **A** d'alimentation est maintenu à une valeur s'éloignant au maximum de 3%, voire de 2% d'une valeur-cible prédéterminée. La valeur-cible prédéterminée est fixée en fonction des différents paramètres de production (par exemple, la composition la de matière extrudée). Cette étape de régulation permet de réduire significativement les grandes variations de pression classiques en sortie d'extrudeuse bivis, les variations de pression résultantes mais plus faibles sont alors lissées/réglées grâce à la pompe à masse fondue de l'étape **H** suivante.

En effet, après l'évacuation de la matière transformée hors de l'extrudeuse, celle-ci passe à l'étape **H** au travers d'une pompe à masse fondue (également appelée parfois « pompe à polymères » ou « pompe de lissage »). Ceci permet de régulariser le débit en sortie de l'extrudeuse, en gommant/lissant les petites variations restantes. La combinaison de l'étape de régulation selon l'invention et le passage par la pompe à masse fondue assure un apport de matière vers l'étape de calandrage avec un débit extrêmement constant et assure une excellente qualité de film en termes d'épaisseur.

Selon un mode de réalisation avantageux, le procédé de l'invention comporte également une étape de contrôle et une étape de mesure de la pression grâce à un capteur de pression positionné en aval de la pompe à masse fondue.

Selon un mode de réalisation avantageux, le procédé de l'invention comporte également une étape de mesure de la pression grâce à un capteur de pression positionné en amont de la pompe à masse fondue.

En aval de l'étape **H,** la matière transformée passe au travers d'une tête d'extrusion à filière plate (étape **1**). Ceci permet de déjà mettre en forme de manière adaptée la matière transformée en sortie de la filière, avant qu'elle ne subisse le calandrage à l'étape **J** suivante.

Finalement, le procédé comprend, en aval de l'étape **I,** une étape **J** de calandrage. Cette étape permet d'obtenir la mise en forme finale de la matière transformée et d'obtenir un film de FPP. Le calandrage selon l'invention est par exemple opéré classiquement en faisant passer la matière transformée entre deux cylindres contrarotatifs dont l'écartement est ajusté en fonction de l'épaisseur de film ciblée. De préférence, selon l'invention, les cylindres contrarotatifs sont refroidis. Le film sortant des deux cylindres est ensuite entraîné par un ou plusieurs autres cylindres rotatifs, il est étiré et finalement enroulé en bobine.

L'invention permet ainsi de fabriquer un film de FPP particulièrement avantageux. En particulier, le film de FPP obtenu/obtenu selon le procédé de l'invention comprend une charge minérale entre 5 et 50% en poids, de préférence entre 5 et 40% en poids, voire entre 10 et 40 % en poids.

Le film de FPP obtenu/obtenable selon le procédé de l'invention est avantageux pour fabriquer un emballage, en particulier par thermoformage dudit film. Ledit emballage est avantageusement un emballage alimentaire. Il peut être tout type d'emballage fabriqué usuellement en PP ou FPP. Par exemple, un récipient, un bol ou un pot, une barquette, un couvercle, un plateau ou un gobelet.

Le film de FPP obtenu/obtenable selon le procédé de l'invention est avantageusement utilisable dans un procédé de thermoformage. Par « thermoformage », on entend, comme communément admis dans le domaine, un procédé dans lequel la matière plastique sous forme d'un film est ramollie par chauffage avant d'être mise en forme par son application sur un moule et ensuite refroidie et démoulée. Un découpage final des bords du film permet d'obtenir le produit fini, d'une part, ainsi que des déchets de production, d'autre part. Ces derniers pourront d'ailleurs être récupérés/valorisés dans le procédé de l'invention, en les intégrant dans la matière à transformer qui est alimentée dans l'extrudeuse bivis.

L'exemple suivant est fourni à des fins d'illustration et n'est pas destiné à limiter la portée de la présente invention.

### Exemple

Un film de FPP chargé à 30% en poids de talc a été fabriqué selon le procédé de l'invention.

La matière initiale à transformer était un mélange de (i) 39% en poids de PP vierge, (ii) 60% en poids de FPP chargé à 30% en poids en talc provenant de déchets de production interne d'une ligne de thermoformage et (iii) 1% en poids d'un mélange de colorants.

Les matières plastiques (PP, FPP) ont été préalablement mélangées grâce à un mélangeur à plusieurs composants. Les colorants ont également été préalablement mélangés indépendamment grâce à un autre mélangeur à plusieurs composants. Les matières plastiques et les colorants ont ensuite été alimentés dans une extrudeuse grâce à une trémie à pesons connectée à un premier orifice ménagé dans le fourreau de l'extrudeuse.

Le débit massique d'alimentation de la matière à transformer a été fixé à une valeur de 2 tonnes/h (valeur-cible prédéterminée) et cette valeur a été maintenue de façon très précise pendant toute la durée du procédé et malgré les variations de granulométrie du FPP recyclé interne, en restant dans la fourchette de 2 tonnes/h ± 2%.

L'extrudeuse était de type bivis corotative, présentant un fourreau dans lequel sont logées deux vis parallèles, identiques et interpénétrées, entraînées en rotation grâce à un moteur. Chacune des vis comportait, de l'entrée à la sortie de l'extrudeuse, la succession suivante de tronçons : tronçon vis T1 / tronçon malaxeur T2 / tronçon vis T3 / tronçon malaxeur T4 / tronçon vis T5. Le fourreau était thermorégulé par chauffage électrique à une température de l'ordre de 250°C sur toute sa longueur.

L'extrudeuse comportait également un moyen d'alimentation secondaire de type trémie à pesons au niveau d'un deuxième orifice ménagé dans le fourreau à hauteur du tronçon T3. Du talc a été alimenté dans l'extrudeuse via ce moyen d'alimentation secondaire, à raison de 20% en poids par rapport au poids de matière à transformer ou 17% en poids par rapport au poids total de matière (matière à transformer+ talc).

L'extrudeuse comportait également un troisième orifice, ménagé dans le fourreau au niveau du tronçon T5, connecté à une bivis en rotation refoulant vers l'intérieur du fourreau, ladite bivis étant elle-même connectée à une pompe d'aspiration, afin d'évacuer l'air, les gaz, la vapeur d'eau présents à l'intérieur de l'extrudeuse/du fourreau et refouler les remontées de matière fondue le cas échéant.

Au sein de l'extrudeuse et du fait de la rotation des deux vis, la matière s'est déplacée au travers des tronçons en subissant entre autres, d'amont en aval, une fusion-plastification (T1), une homogénéisation (T2), une compoundage (T4) et un transport-compression (T5). La matière est ensuite sortie de l'extrudeuse pour passer au travers d'une pompe à masse fondue puis d'une filière plate.

La pression en entrée et sortie de pompe était mesurée grâce à un capteur de pression. La pression en amont de la pompe était de l'ordre de 40 bar et celle en aval était d'environ 150 bar.

Finalement, la matière pré-mise en forme par son passage dans la filière plate a subi un processus de calandrage, par passage au travers de deux cylindres contrarotatifs refroidis écartés d'une certaine distance. Le film sortant des deux cylindres a ensuite été entraîné par plusieurs autres cylindres rotatifs, étiré et finalement enroulé en bobine.

Le film ainsi produit avait une épaisseur de 550 micromètres et une charge minérale en talc de 30% en poids. Le film était de très bonne qualité et d'épaisseur sensiblement stable/constante.

## Revendications

1. Procédé de fabrication continue d'un film de polypropylène chargé (FPP), ledit procédé comprenant les étapes suivantes, d'amont en aval:
- une étape **A** d'alimentation d'une extrudeuse bivis corotative avec une matière à transformer comprenant au moins 40% de polypropylène, ladite extrudeuse comprenant un fourreau dans lequel sont logées deux vis identiques entraînées en rotation dans le même sens, chacune des deux vis comportant une pluralité de tronçons (Tx);
et, au sein de ladite extrudeuse,
• une étape **B** de fusion-plastification au niveau d'un tronçon **T1** de type vis ;
• une étape **C** d'homogénéisation au niveau d'un tronçon **T2** de type malaxeur ;
• une étape **D** d'alimentation avec une charge minérale au niveau d'un tronçon **T3** de type vis, la quantité de charge minérale à l'étape **D** étant fixée en fonction de la quantité de charge minérale désirée dans ledit film de FPP ;
• une étape **E** de compoundage au niveau d'un tronçon **T4** de type malaxeur ;
• une étape **F** de transport-compression au niveau d'un tronçon **T5** de type vis ;
- une étape **G** d'évacuation d'une matière transformée hors de ladite extrudeuse ;
- une étape **H** de passage de ladite matière transformée au travers d'une pompe à masse fondue ;
- une étape **I** de passage de ladite matière transformée au travers d'une tête d'extrusion à filière plate ; et
- une étape **J** de calandrage, permettant d'obtenir un film de FPP comprenant une charge minérale entre 5 et 50% en poids ;
ledit procédé comprenant en outre une étape de régulation de la pression, en sortie de ladite extrudeuse et directement en aval de l'étape **G**, en maintenant le débit massique de matière à transformer à l'étape **A** d'alimentation à une valeur s'éloignant au maximum de 5% d'une valeur-cible prédéterminée.

2. Procédé selon la revendication précédente, caractérisé en ce la matière à transformer comprenant au moins 50% de polypropylène.

3. Procédé selon l'une des revendications précédentes, **caractérisé en ce que** la matière à transformer comprend au moins 20% en poids de FPP recyclé, notamment issu de déchets de production par thermoformage.

4. Procédé selon l'une des revendications précédentes, **caractérisé en ce qu'**il comprend en outre une étape d'échappement, en aval de l'étape **E** de compoundage et notamment à l'étape **F** de transport-compression.

5. Procédé selon la revendication précédente, **caractérisé en ce que** l'étape d'échappement se fait grâce à un orifice additionnel ménagé dans le fourreau et connecté à une bivis en rotation refoulant vers l'intérieur du fourreau, ladite bivis étant connectée à une pompe d'aspiration.

6. Procédé selon l'une des revendications précédentes, **caractérisé en ce que**, à l'étape **D** d'alimentation, la charge minérale est ajoutée à raison d'au moins 5% en poids par rapport au poids de matière à transformer, de préférence d'au moins 10 % en poids.

7. Procédé selon l'une des revendications précédentes, **caractérisé en ce que** l'étape d'alimentation **A** et/ou D se fait à l'aide d'une trémie à pesons.

8. Procédé selon l'une des revendications précédentes, **caractérisé en ce que**, à l'étape **A** d'alimentation, la matière à transformer comprend en outre un ou plusieurs additif(s), notamment un ou plusieurs colorants.

9. Procédé selon l'une des revendications précédentes, **caractérisé en ce que** les deux vis de ladite extrudeuse sont partiellement ou totalement interpénétrées.

10. Procédé selon l'une des revendications précédentes, **caractérisé en ce que** le fourreau est thermorégulé, notamment à l'aide de résistances électriques ou de moyen de chauffage par infrarouge ou de moyens de chauffage par induction.

11. Procédé selon la revendication précédente, **caractérisé en ce que** le fourreau est thermorégulé à une température dans une gamme allant de 220 à 280°C.
